# EUROPEAN PATENT SPECIFICATION

(11) **EP 1 087 874 B1**
(45) Date of publication and mention of the grant of the patent: **07.12.2005**
(21) Application number: 99918385.8
(22) Date of filing: 20.04.1999
(51) Int. Cl.: B60G 21/05

(54) **SUSPENSION**
RADAUFHÄNGUNG
SUSPENSION

(43) Date of publication of application: 04.04.2001
(73) Proprietor: Instituto Superior Técnico, 1069 Lisboa Codex (PT)
(72) Inventor: RELGIO RIBEIRO, António, Manuel, P-2745 Queluz (PT)
(74) Representative: Pereira da Cruz, Joao
(86) International application number: PCT/PT1999/000009
(87) International publication number: WO 2000/063033

(56) References cited:
- EP-A- 0 163 382
- GB-A- 965 667
- US-A- 2 689 747
- US-A- 2 978 255

## Description

The present document relates to a suspension system.

The suspension of a motor vehicle is responsible for keeping its wheels in contact with the ground, in order to ensure traction and allow for an adequate level of comfort while maintaining the stability of the vehicle. However, to meet these requirements is a matter of compromise. In particular, when the vehicle is subject to a side force, it is difficult to guarantee both the comfort of a soft suspension and stability, since the latter is normally achieved by means of a more rigid suspension system which prevents large side oscillations. The presence of a lateral component in the resultant force that the vehicle is subjected to occurs particularly on bends and in off-road situations. In these cases, the tendency of the vehicle is to roll sideways, which on the one hand will increase the lateral component to which passengers and the vehicle's load are subjected to, thus causing greater discomfort and a risk of unbalancing the vehicle's load, and on the other hand it will move the centre of gravity to the same side as the lateral force, which will increase its effect even further.

### Background to the invention

In order to resolve or at least minimise this problem without using very hard or uncomfortable suspensions, active suspensions have been developed in order to try to counterbalance the effect of the side forces. However, this solution is not without problems of its own, notably complexity, manufacturing costs and the fact that it uses part of the available power, which are by no means of minor importance. Of the solutions already used, special mention should be made of the one that is normally used, i.e. a stabiliser consisting of a torsion rod which reduces the lateral inclination which occurs when the vehicles goes round a bend.

Other suspension systems use transverse rods mounted across the vehicle, such as the suspension system according to the preamble of claim 1 is described in European patent n° EP349584, or suspension systems which make it possible to create movements which give the vehicle greater stability, such as the suspension systems described in European patent n°s EP348634 and EP348817. All these documents refer to suspension systems which reduce the sideways roll of the vehicle. However, the composition and functioning thereof are complex and different from the suspension system described in this patent application.

### Summary of the invention

The solution proposed by the suspension system which is the subject of the invention makes it possible to control the sideways oscillation of the vehicle without draining the engine power supply and it is simple enough to avoid a significant increase in production costs.

It is a simple mechanism which makes use of conventional suspension elements and, without increasing the rigidity of the suspension when driving over flat ground in a straight line, it redistributes this rigidity by increasing it on the side to which the lateral force pushes the vehicle and reducing it on the other side. In this way, when the vehicle goes round a bend, this suspension makes it possible to compensate, to an extent to be defined when the system is implemented, the effect of the centrifugal component of the force, by causing the vehicle body to roll into the bend. Likewise, even when driving in a straight line, it is possible to compensate any possible lateral inclination of the ground, thus ensuring a more horizontal position for the vehicle body.

The behaviour of the vehicle is therefore improved as described above, without the inconveniences of active suspensions.

### Short description of the drawings

For an easier understanding of the description give below, a sheet of drawings showing one embodiment of the model is attached hereto by way of a non-restrictive example, in which:
Figure 1 shows a schematic diagram of the suspension described in the invention;
Figure 2, which is also a schematic diagram, shows how the suspension which is the subject of the invention works.

### Detailed description of the invention

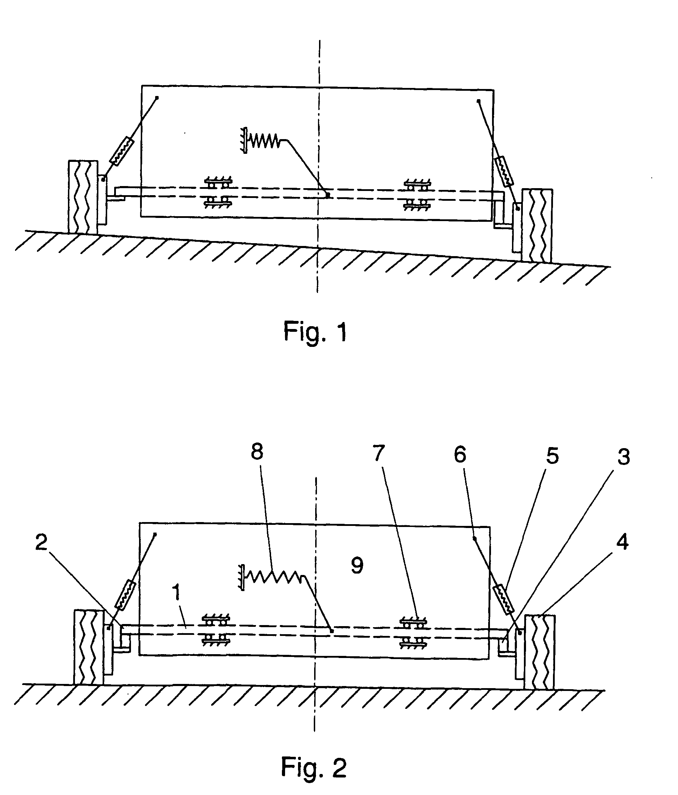

As can be seen, the suspension described in the invention, as shown in figure 1, consists of a transverse rod (1), or a functionally equivalent structure, the ends (2) of which are attached to the arms (3) of the wheels (4) so that, on the transverse vertical plane, the oscillating movement of the wheels (4) in relation to the rod (1) is approximately rectilinear and vertical. Furthermore, the springs (5) which support the wheels (4) are attached to the structure of the vehicle body (9) at points (6) situated on the inside of the vertical of the points at which they articulate with the hubs of said wheels.

Each end of the rod (1) has a geometric configuration or even a structure suitable for attaching the suspension arms (3).

The rod (1) is attached to the structure of the vehicle by means of an element (7) which only allows it to make relative transverse movement, the amplitude of which is conditioned by a spring or springs (8) which attach the rod (1) to the structure of the vehicle, so that the movement allowed does not go beyond the point at which any of the springs (5) of the wheels (4) take on a vertical position, and which simultaneously regulate the relative movement between the vehicle body (9) and the rod (1).

In a conventional suspension system, each wheel is attached to the structure of the vehicle by means of an articulated arm system and a set of elastic and dissipative elements. The description hereunder makes reference to the points where these arms articulate with the structure, hereby referred to as points of articulation. It also covers the points where the elastic elements or springs are attached to the structure, hereby referred to as suspension points. Each pair of wheels is also covered (right and left wheel of each axle).

Thus, this new suspension consists of a rod or equivalent structure (1) between the points of articulation of each pair of wheels (4). The rod moves transversally in relation to the vehicle body (9), but the maximum amplitude of this movement is limited and is centred by a spring-shock absorber system.

The points of articulation of each wheel are situated at the ends (2) of a rod (1) which can move transversally in relation to the body of the vehicle within the limits imposed by the project.

The suspension points remain inside the structure of the body (9) of the vehicle in suitably chosen places. The selection suitable for each implementation should take into account the elastic and dissipative characteristics of the wheels and the shock absorbers, the amplitude of the lateral movement permitted for the rod (generally a few centimetres) and the location of the suspension points in the structure of the vehicle, the positioning and the dimension of the rod and the position of the points of articulation in the rod.

The system should be assembled in such a way that, when the vehicle is in its normal position, i.e. stationary on flat ground, the springs (5) are in a divergent position, i.e. the ends attached to the wheels are further apart than the ends which are attached to the vehicle body, the rod remaining horizontal.

The movement of the rod should be limited so that even in its extreme positions, the line of action of the springs (5) never forms a right angle with the line of action of the rod (1).

Furthermore, the rigidity of the springs (5) should be sufficient for supporting the maximum weight of the vehicle with the rod in any position, at an adequate distance from the ground.

Under these circumstances, a lateral component of the resulting force applied to the vehicle body will bring towards the vertical the springs situated on the side towards which this force pushes the vehicle body, making the vertical component of its reaction bigger and tending to lift the vehicle. Inversely, on the opposite side, the vertical component of the reaction of the springs will be lower since their position becomes less vertical, meaning that the weight of the vehicle will lower it on this side. Thus, a signal is generated opposite to the one caused by the lateral component considered initially.

The dimensions of the springs and the judicious positioning of its rest points make it possible to project this suspension in order to partially or totally compensate the tendency to roll sideways, or even overcompensate it (which would usually not be of any practical interest in normal motor vehicles).

The mechanism described above makes it possible to adapt traditional suspension systems, by replacing the attachment of the suspension arms to the vehicle body with the attachment thereof to the ends of the transverse rod described above. Since this mechanism can be associated to various types of traditional suspension, for example superimposed triangles, oscillating arm, etc., the geometry will be suitable for the implementation in question.

## Claims

1. Suspension for a motor vehicle in which each pair of wheels (4), is connected to a transverse rod (1) attached to the body of a vehicle, the ends of the said rod being attached to the suspension arms (3) of the wheels (4), whose oscillatory movement in relation to the said rod (1) is approximately rectilinear and vertical, the said wheels (4) being supported by springs (5) which are attached to the body (9) of a vehicle at points (6) situated on the inside of the verticals of the points at which the wheels articulate with the wheel hubs, **characterised in that:**
the said transverse rod (1), assembled on two elements (7) attached to the body (9) of a vehicle, whereby said elements (7) allow the rod (1) to move transversely to the longitudinal axis of the vehicle;
thereby causing the horizontal component of any force exerted on the body (9) of a vehicle, transversally to its longitudinal axis, to bring towards the vertical the springs (5) on the side towards which the force pushes the vehicle body, thus increasing the vertical component of the reaction of the springs and tending to raise the vehicle and, conversely, on the opposite side, decreasing the vertical component of the reaction of the springs by virtue of a greater distancing from its vertical position, meaning that the weight of the vehicle will cause it to lower on that side.

2. Suspension for a motor vehicle, according to the previous claim, **characterised in that** the elements (7) where the rod (1) is assembled only allow the relative transversal movement of the said rod (1), the range of this movement being limited by springs (8) which connect the rod (1) to the structure (9) of the vehicle, the displacement permitted not exceeding the point at which any of the springs (5) of the wheels (4) reach the vertical.

3. Suspension, according to the previous claims, **characterised in that** the bottom ends of the springs (5) attached to the wheels (4) are further apart than their top ends attached to the body (9) of a vehicle.

4. Suspension, according to the previous claims, **characterised in that** the transversal movement of the aforementioned rod (1) is limited so that in its outermost positions the line of action of any of the springs (5) never forms a right angle with the line of action of the rod (1).

## Patentansprüche

1. Aufhängung für ein Motorfahrzeug, bei der jedes Radpaar (4) mit einem Querträger (1) verbunden ist, der an der Karosserie eines Fahrzeuges angebracht ist, wobei die Enden dieses Trägers an den Aufhängearmen (3) der Räder (4) angebracht sind, deren Schwingbewegung in Bezug zu der Stange (1) ungefähr geradlinig und vertikal ist, wobei die Räder (4) durch Federn (5) abgestützt sind, die an der Karosserie (9) eines Fahrzeuges an Punkten (6) angebracht sind, die auf der Innenseite der Vertikalen der Punkte gelegen sind, an denen die Räder mit den Radnaben verschwenken, **dadurch gekennzeichnet, dass**:
der Querträger (1) ist an zwei Elementen (7) montiert, die an der Karosserie (9) eines Fahrzeuges angebracht sind, wobei diese Elemente (7) es dem Träger (1) erlauben, quer zu der Längsachse des Fahrzeuges sich zu bewegen;
wodurch die horizontale Komponente einer jeden auf die Karosserie eines Fahrzeuges (9) quer zu dessen Längsachse ausgeübten Kraft verursacht, dass die Federn in Richtung der Vertikalen auf der Seite ausgerichtet werden, gegen die die Kraft die Fahrzeugkarosserie stößt, sodass dadurch die vertikale Komponente der Reaktion der Federn erhöht wird und dazu tendiert, das Fahrzeug anzuheben, und im entgegengesetzten Falle die vertikale Komponente der Reaktion der Federn durch eine größere Entfernung der vertikalen Position abgeschwächt wird, was bedeutet, dass das Gewicht des Fahrzeuges auf dieser Seite verringert wird.

2. Aufhängung für ein Motorfahrzeug nach dem vorhergehenden Anspruch,
**dadurch gekennzeichnet, dass** die Elemente (7), an denen die Stange (1) angebracht ist, lediglich die relative Querbewegung der Stange (1) erlauben, wobei der Bereich dieser Bewegung durch Federn (8) beschränkt wird, die die Stange (1) mit der Karosserie (9) des Fahrzeuges verbinden, wobei die erlaubte Verschiebung nicht den Punkt überschreitet, an dem jede der Federn (5) der Räder (4) die Vertikale erreichen.

3. Aufhängung nach den vorhergehenden Ansprüchen, **dadurch gekennzeichnet, dass** die Bodenenden der Federn (5), die an den Rädern (4) angebracht sind, voneinander weiter entfernt sind als ihre oberen, mit der Karosserie (9) eines Fahrzeuges verbundenen Enden.

4. Aufhängung nach den vorhergehenden Ansprüchen, **dadurch gekennzeichnet, dass** die Querbewegung der erwähnten Stange (1) so beschränkt ist, dass in ihren äußersten Positionen die Wirkungslinie jeder der Federn (5) niemals einen rechten Winkel mit der Wirkungslinie der Stange (1) bildet.

## Revendications

1. Suspension pour véhicule automobile où chaque paire de roues (4) est connectée à une barre transversale (1) connectée à la carrosserie d'un véhicule, les extrémités de ladite barre étant connectées aux bras de suspension (3) des roues (4), dont le mouvement oscillatoire par rapport à ladite barre (1) est approximativement rectiligne et vertical, lesdites roues (4) étant appuyées par des ressorts (5) qui sont connectés à la carrosserie (9) d'un véhicule à des points (6) situés à l'intérieur des verticales des points où les roues s'articulent avec les moyeux des roues, **caractérisée en ce que:**
ladite barre transversale (1) est montée sur deux éléments (7) connectés à la carrosserie (9) d'un véhicule, lesdits éléments (7) permettant à la barre (1) de se déplacer transversalement par rapport à l'axe longitudinal du véhicule;
ce qui fait que le composant horizontal de toute force exercée sur la carrosserie (9) d'un véhicule, transversalement à son axe longitudinal, fait approcher de la verticale les ressorts (5) du côté vers lequel la force pousse la carrosserie du véhicule, en augmentant le composant vertical de la réaction des ressorts et tendant à soulever le véhicule et, inversement, du côté opposé, réduisant le composant vertical de la réaction des ressorts en vertu d'un plus grand espacement de sa position verticale, donc le poids du véhicule le fera baisser de ce côté-là.

2. Suspension pour véhicule automobile, selon la revendication précédente, **caractérisée en ce que** les éléments (7) où la barre (1) est montée ne permettent qu'un mouvement transversal relatif de ladite barre (1), l'amplitude de ce mouvement étant conditionnée par des ressorts (8) qui connectent la barre (1) à la structure (9) du véhicule, le déplacement permis n'excédant pas le point auquel l'un quelconque des ressorts (5) des roues (4) atteint la verticale.

3. Suspension, selon les revendications précédentes, **caractérisée en ce que** la distance entre les extrémités inférieures des ressorts (5) connectées aux roués (4) est plus grande que celle qui sépare leurs extrémités supérieures connectées à la carrosserie (9) d'un véhicule.

4. Suspension, selon les revendications précédente, **caractérisée en ce que** le mouvement transversal de ladite barre (1) est limité de façon à ce que dans ses positions les plus extérieures la ligne d'action des ressorts (5) ne forme jamais un angle droit avec la ligne d'action de la barre (1).
